# EUROPEAN PATENT APPLICATION

(11) **EP 1 806 563 A1**
(43) Date of publication of application: **11.07.2007**
(21) Application number: 04793102.7
(22) Date of filing: 28.10.2004
(51) Int. Cl.: G01D 5/36, B66B 3/02

(54) **ENCODER**

(71) Applicant: MITSUBISHI DENKI KABUSHIKI KAISHA, Tokyo 100-8310 (JP)
(72) Inventor: TSUMAGI, Nobuaki Mitsubishi Denki Kabushiki Kaisha, Tokyo 100-8310 (JP)
(74) Representative: HOFFMANN EITLE
(86) International application number: PCT/JP2004/015994
(87) International publication number: WO 2006/046291

(57) **Abstract**

Provided is an encoder including a rotating plate, a first processing device and a second processing device. The rotating plate is provided with a code pattern. The code pattern has a plurality of slits, which are arranged at intervals in a rotational direction of the rotating plate. The first processing device is provided with a first light emitting section for emitting light to the code pattern, a first light receiving section for receiving light emitted from the first light emitting section through the code pattern to generate a signal corresponding to rotation of the rotating plate, and a first processing circuit section for processing the signal from the first light receiving section. The second processing device is provided with a second light emitting section for emitting light to the code pattern, a second light receiving section for receiving light emitted from the second light emitting section through the code pattern to generate a signal corresponding to the rotation of the rotating plate, and a second processing circuit section for processing the signal from the second light receiving section.

## Description

### TECHNICAL FIELD

The present invention relates to an encoder for measuring, for example, a rotational speed and a rotational position of a rotating shaft.

### BACKGROUND ART

Up to now, there has been proposed an encoder for detecting a code of a rotating code plate provided to a rotating shaft to measure a rotational speed and a rotational position of the rotating shaft. An encoder signal obtained by detecting the code of the rotating code plate is processed by an electronic circuit section provided in a printed circuit board and led as an encoder output to an outside (see Patent Document 1).

Patent Document 1: JP 10-141996 A

### DISCLOSURE OF THE INVENTION

### PROBLEMS TO BE SOLVED BY THE INVENTION

However, the conventional encoder has only a single system for leading the encoder output using the rotating code plate. Therefore, in order to improve the reliability of measurement, it is necessary to provide a plurality of encoders to the rotating shaft. Thus, a reduction in cost cannot be achieved and a space for placing each of the encoders is expanded.

The present invention has been made to solve the above-mentioned problem. An object of the present invention is to obtain an encoder in which the reduction in cost can be achieved and the reliability can be improved.

### MEANS FOR SOLVING THE PROBLEMS

An encoder according to the present invention includes: a rotating plate in which a code pattern including a plurality of slits arranged at intervals in a rotational direction of the rotating plate is provided; a first processing device including a first light emitting section for emitting light to the code pattern, a first light receiving section for receiving the light emitted from the first light emitting section through the code pattern to generate a signal corresponding to rotation of the rotating plate, and a first processing circuit section for processing the signal from the first light receiving section; and a second processing device including a second light emitting section for emitting light to the code pattern, a second light receiving section for receiving the light emitted from the second light emitting section through the code pattern to generate a signal corresponding to the rotation of the rotating plate, and a second processing circuit section for processing the signal from the second light receiving section.

### BRIEF DESCRIPTION OF THE DRAWINGS

Fig. 1 is a structural view showing an elevator in Embodiment 1 of the present invention.
Fig. 2 is a perspective view showing the encoder of Fig. 1.

### BEST MODE FOR CARRYING OUT THE INVENTION

Hereinafter, a preferred embodiment of the present invention will be described with reference to the accompanying drawings.

### EMBODIMENT 1.

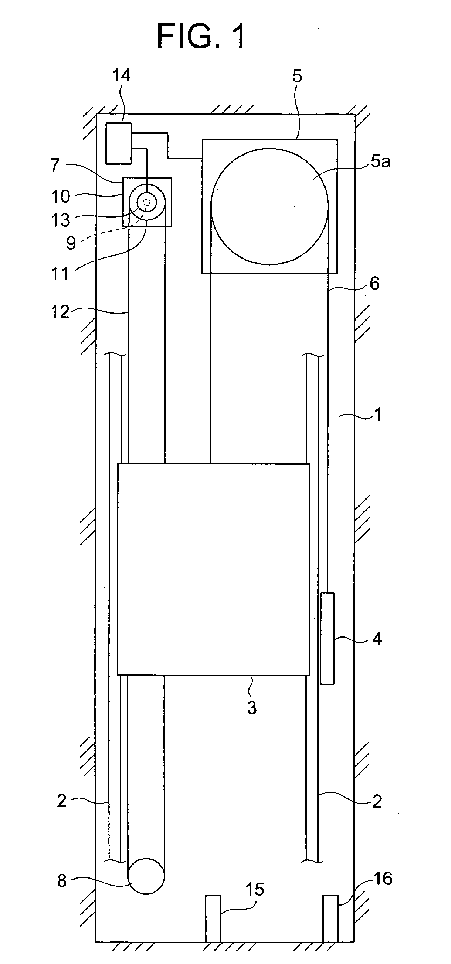

Fig. 1 is a structural view showing an elevator in Embodiment 1 of the present invention. In this figure, a pair of car guide rails 2 and a pair of balance weight guide rails (not shown) are provided in an elevator shaft 1. A car 3 is located between the car guide rails 2 so that the car 3 can be elevated. A balance weight 4 is located between the balance weight guide rails so that the balance weight 4 can be elevated.

A hoist 5 which is a drive device is provided in an upper portion of the elevator shaft 1. A plurality of main ropes 6 are looped around a drive sheave 5a of the hoist 5. The car 3 and the balance weight 4 are suspended in the elevator shaft 1 by the main ropes 6. The car 3 and the balance weight 4 are moved up or down in the elevator shaft 1 by a driving force of the hoist 5 while they are guided along the car guide rails 2 and the balance weight guide rails.

An emergency stop device (not shown) which operates at a time when a speed of the car 3 becomes an abnormal speed is provided in a lower portion of the car 3. The emergency stop device may hold the car guide rails 2 to inhibit the fall of the car 3. A speed regulator (governor) 7 for operating the emergency stop device is provided in the upper portion of the elevator shaft 1. A tension pulley 8 is provided in a lower portion of the elevator shaft 1.

The governor 7 includes a governor main body 10 with a rotating shaft 9, and a governor sheave 11 which is integrally provided with the rotating shaft 9 and rotatable about the governor main body 10. The governor sheave 11 and the tension pulley 8 are looped with a governor rope 12. One end portion and the other end portion of the governor rope 12 are connected with an operating portion (not shown) of the emergency stop device. The governor sheave 11 and the tension pulley 8 each are rotated according to the up-or-down movement of the car 3. An encoder 13 for generating a signal corresponding to the rotation of the governor sheave 11 is provided to the rotating shaft 9.

The governor rope 12 is held by the governor 7 when the speed of the car 3 becomes abnormal. The movement of the governor rope 12 is stopped by holding with the governor 7. Therefore, the car 3 is moved along the governor rope 12 and the emergency stop device is operated.

A control device 14 for controlling the operation of the elevator is provided in the elevator shaft 1 . The control device 14 is electrically connected with the hoist 5 and the encoder 13. The control device 14 controls the drive of the hoist 5 based on information from the encoder 13. Note that a car shock absorber 15 for absorbing a shock to the car 3 and a balance weight shock absorber 16 for absorbing a shock to the balance weight 4 are provided in the power portion of the elevator shaft 1.

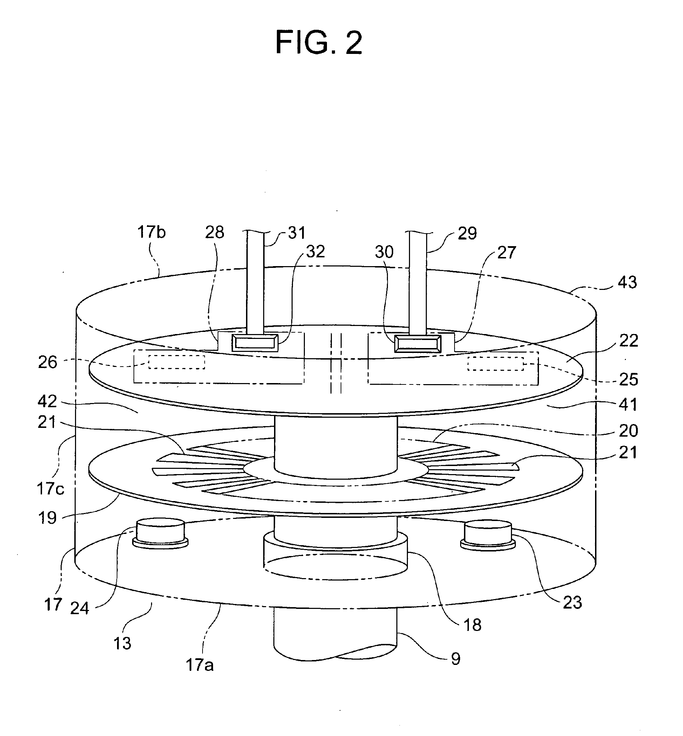

Fig. 2 is a perspective view showing the encoder 13 of Fig. 1. In this figure, a case 17 is rotatably supported by the rotating shaft 9 through a bearing 18 . An end portion of the rotating shaft 9 is inserted into the case 17 . The case 17 includes an extending through portion 17a through which the rotating shaft 9 extends, an opposed portion 17b which is opposed to the extending through portion 17a in a shaft line direction of the rotating shaft 9, and a side portion 17c provided between respective outer circumferential portions of the extending through portion 17a and the opposed portion 17b. The extending through portion 17a and the opposed portion 17b each are perpendicular to the shaft line of the rotating shaft 9. The bearing 18 is located between the extending through portion 17a and the rotating shaft 9.

A rotating plate 19 integrally rotatable with the rotating shaft 9 is fixed to the rotating shaft 9. The rotating plate 19 is located in the case 17. The rotating plate 19 is perpendicular to the shaft line of the rotating shaft 9. The rotating plate 19 has a code pattern 20 provided therein so as to surround the rotating shaft 9. The code pattern 20 has a plurality of slits 21 arranged at intervals in the rotational direction (circumferential direction) of the rotating plate 19. Each of the slits 21 extends in the diameter direction of the rotating plate 19.

An insulating printed circuit board 22 located between the rotating plate 19 and the opposed portion 17b is held in the case 17. The printed circuit board 22 is perpendicular to the shaft line of the rotating shaft 9.

A first light emitting element (first light emitting section) 23 and a second light emitting element (second light emitting section) 24, each of which can emit light, are provided on an inner surface of the extending through portion 17a. Each of the first and second light emitting elements 23 and 24 is, for example, an LED. Each of the first and second light emitting elements 23 and 24 emits light to the code pattern 20. A direction of the light emitted from each of the first and second light emitting elements 23 and 24 is parallel to the shaft line of the rotating shaft 9. The first and second light emitting elements 23 and 24 are arranged at an interval in the rotational direction of the rotating plate 19. In this embodiment, the first and second light emitting elements 23 and 24 are arranged symmetrical with respect to the shaft line of the rotating shaft 9.

The printed circuit board 22 includes a first light receiving element (first light receiving section) 25 for receiving light emitted from the first light emitting element 23 through the code pattern 20 and a second light receiving element (second light receiving section) 26 for receiving light emitted from the second light emitting element 24 through the code pattern 20, which are provided thereon. Each of the first and second light receiving elements 25 and 26 is an element for converting light into an electrical signal. Each of the first and second light receiving elements 25 and 26 is, for example, a photodiode or a phototransistor. The first receiving element 25 is opposed to the first emitting element 23 through the code pattern 20. The second receiving element 26 is opposed to the first emitting element 24 through the code pattern 20.

The code pattern 20 repeatedly transmits and blocks the light from the first light emitting element 23 while the rotating plate 19 rotates. That is, when a position of the slit 21 coincides with a position of the first light receiving element 25 as viewed from the first light emitting element 23, the light from the first emitting element 23 passes through the code pattern 20. When the position of the slit 21 is shifted from the position of the first light receiving element 25, the light is blocked by the code pattern 20. Therefore, upon receiving the light from the first emitting element 23 through the code pattern 20 while the rotating plate 19 rotates, the first light receiving element 25 generates a pulse signal corresponding to the rotation of the rotating plate 19.

In addition, the code pattern 20 repeatedly transmits and blocks the light from the second light emitting element 24 while the rotating plate 19 rotates. That is, when the position of the slit 21 coincides with a position of the second light receiving element 26 as viewed from the second light emitting element 24, the light from the second emitting element 24 passes through the code pattern 20. When the position of the slit 21 is shifted from the position of the second light receiving element 26, the light is blocked by the code pattern 20. Therefore, upon receiving the light from the second emitting element 24 through the code pattern 20 while the rotating plate 19 rotates, the second light receiving element 26 generates a pulse signal corresponding to the rotation of the rotating plate 19.

The printed circuit board 22 includes a first processing circuit section 27 for processing the signal from the first light receiving element 25 and a second processing circuit section 28 for processing the signal from the second light receiving element 26, which are provided thereon. That is, thefirstprocessingcircuit section 27 performs processing for waveform-shaping the pulse signal from the first light receiving element to obtain an output signal of the encoder. The second processing circuit section 28 performs processing for waveform-shaping the pulse signal from the second light receiving element to obtain an output signal of the encoder. The first and second processing circuit sections 27 and 28 are electrically insulated from each other.

A first cable 29 which is a first transmission line is electrically connected between the first processing circuit section 27 and the control device 14. The first cable 29 is detachably connected with the first processing circuit section 27 through a first connector 30.

A second cable 31 which is a second transmission line is electrically connected between the second processing circuit section 28 and the control device 14. The second cable 31 is detachably connected with the second processing circuit section 28 through a second connector 32.

The transmission of the output signal from the first processing circuit section 27 to the control device 14 and the supply of power from the control device 14 to the first processing circuit section 27 are performed through the first cable 29. The transmission of the output signal from the second processing circuit section 28 to the control device 14 and the supply of power from the control device 14 to the second processing circuit section 28 are performed through the second cable 31. That is, the first and second cables 29 and 31 are separately used to perform electrical information communication with the control device 14.

Note that a first processing device 41 is composed of the first light emitting element 23, the first light receiving element 25, and the first processing circuit section 27 . A second processing device 42 includes the second light emitting element 24, the second light receiving element 26, and the second processing circuit section 28. That is, the first processing device 41 and the second processing device 42 can separately measure the rotation of the rotating plate 19 which is commonly used. The first and second processing devices 41 and 42 are arranged at an interval in the rotational direction of the rotating plate 19.

Further, a support 43 for supporting the first and second processing devices 41 and 42 includes the case 17 and the printed circuit board 22. That is, the first and second processing devices 41 and 42 are supported by the support 43 which is commonly used. Still further, the encoder 13 includes the rotating plate 19, the first processing device 41, and the second processing device 42.

Next, the operation will be described. While the elevator operates, the first and second light emitting elements 23 and 24 continuously emit light owing to the supply of power from the control device 14. When the car 3 moves up or down in the elevator shaft 1, the governor sheave 11 and the rotating plate 19 are rotated according to the up-or-down movement of the car 3.

When the rotating plate 19 rotates,the code pattern 20 also rotates. Light beams from the first and second light emitting elements 23 and 24 pass through the code pattern 20 or are blocked by the code pattern 20 at a cycle corresponding to the rotation of the rotating plate 19 by the rotation of the code pattern 20.

The first light receiving element 25 receives the light from the first light emitting element 23 through the code pattern 20. Therefore, a cycle at which the first light receiving element 25 receives the light from the first light emitting element 23 is the cycle corresponding to the rotation of the rotating plate 19. Thus, the first light receiving element 25 generates the pulse signal corresponding to the rotation of the rotating plate 19.

After that, the pulse signal generated by the first light receiving element 25 is transmitted to the first processing circuit section 27 and is subj ected to waveform shaping by the first processing circuit section 27. Then, the pulse signal obtained by the waveform shaping is transmitted as the output signal of the encoder from the first processing circuit section 27 to the control device 14 through the first cable 29.

On the other hand, the second light receiving element 26 receives the light from the second light emitting element 24 through the code pattern 20. Therefore, a cycle at which the second light receiving element 26 receives the light from the second light emitting element 24 is the cycle corresponding to the rotation of the rotating plate 19. Thus, the second light receiving element 26 also generates the pulse signal corresponding to the rotation of the rotating plate 19 as in a case of the first light receiving element 25.

After that, the pulse signal generated by the second light receiving element 26 is transmitted to the second processing circuit section 28 and is subjected to waveform shaping by the second processing circuit section 28. Then, the pulse signal obtained by the waveform shaping is transmitted as the output signal of the encoder from the second processing circuit section 28 to the control device 14 through the second cable 31.

When the output signals from the first and second processing circuit sections 27 and 28 are inputted to the control device 14, the respective output signals are separately processed in the control device 14 and the operation of the elevator is controlled based on a result obtained by processing.

In the above-mentioned encoder, the first and second processing devices 41 and 42 measure the rotation of the rotating plate 19 which is commonly used, so the plurality of output signals associated with the rotation of the rotating plate 19 can be separately obtained by the first and second processing devices 41 and 42. Therefore, even when, for example, the first processing device 41 is damaged, the output signal can be obtained by the second processing device 42, so the reliability of the encoder can be improved. An object to be measure by the first and second processing devices 41 and 42 is the rotating plate 19 which is commonly used, so the number of rotating plates 19 can be reduced to achieve a reduction in cost. When the number of rotating plates 19 reduces, a mounting space can be narrowed.

The first and second processing devices 41 and 42 are supported by the support 43 which is commonly used. Therefore, the mounting space of the entire encoder can be further narrowed. In particular, a size of the encoder (thickness size of the encoder) in the shaft line direction of the rotating shaft 9 can be reduced. Not only the number of rotating plates 19 but also the number of supports 43 can be reduced, so the cost can be further reduced. The number of encoders to be exchanged reduces, so a time for the exchange operation of the encoders can be shortened.

The first and second processing devices 41 and 42 are arranged at an interval in the rotational direction of the rotating plate 19. Therefore, an increase in size in the shaft line direction of the rotating shaft 9 can be prevented.

The first and second processing devices 41 and 42 are electrically insulated from each other. The first and second processing circuit sections 27 and 28 are connected with the first and second cables 29 and 31, respectively, which are provided to make separate electrical connection with an outside. Therefore, for example, the first and second cables 29 and 31 are connected with power supply systems which are separated from each other. Thus, even when one of the power supply systems is damaged, the power can be supplied from the other of the power supply systems, with the result that the reliability can be further improved.

In the above-mentioned embodiment, the two processing devices 41 and 42 are provided in the case 17. Three ormore processing devices may be provided in the case 17. In this case, the respective processing devices are arranged at intervals in the rotational direction of the rotating plate 19.

## Claims

1. An encoder, **characterized by** comprising:
a rotating plate in which a code pattern including a plurality of slits arranged at intervals in a rotational direction of the rotating plate is provided;
a first processing device including a first light emitting section for emitting light to the code pattern, a first light receiving section for receiving the light emitted from the first light emitting section through the code pattern to generate a signal corresponding to rotation of the rotating plate, and a first processing circuit section for processing the signal from the first light receiving section; and
a second processing device including a second light emitting section for emitting light to the code pattern, a second light receiving section for receiving the light emitted from the second light emitting section through the code pattern to generate a signal corresponding to the rotation of the rotating plate, and a second processing circuit section for processing the signal from the second light receiving section.

2. The encoder according to claim 1, **characterized in that** the first processing device and the second processing device are supported by a common support.

3. The encoder according to claim 1 or 2, **characterized in that** the first processing device and the second processing device are arranged at an interval in the rotational direction of the rotating plate.

4. The encoder according to any one of claims 1 to 3, **characterized in that**:
the first processing device and the second processing device are electrically insulated from each other; and
the first processing circuit section and the second processing circuit section are electrically connected with a first transmission line and a second transmission line, respectively, which are provided to make separate electrical connection with an outside.
